# EUROPÄISCHE PATENTANMELDUNG

(11) **EP 2 567 645 A1**
(43) Veröffentlichungstag der Anmeldung: **13.03.2013**
(21) Anmeldenummer: 12182652.3
(22) Anmeldetag: 31.08.2012
(51) Int. Cl.: A47J 31/36

(54) **Elastische Tresterverpressung**

(30) Priorität: 09.09.2011 DE 102011082436
(71) Anmelder: BSH Bosch und Siemens Hausgeräte GmbH, 81739 München (DE)
(72) Erfinder: Höglauer, Michael, 83246 Unterwössen (DE); Ostermaier, Albert, 83371 Stein a.d. Traun (DE); Steffl, Michael, 83250 Marquartstein (DE)

(57) **Zusammenfassung**

Die Erfindung betrifft eine Brühgruppe (100) eines Kaffeevollautomaten mit einem verschiebbar gelagerten Brühkolben (4), dessen Oberseite eine Tresterfläche (12) beim Brühvorgang definiert, einer mit dem Brühkolben (4) gekoppelten Kolbenstange (3) und einem Steuerhebel (17) für den Antrieb der Kolbenstange (3), gekennzeichnet durch ein elastisches Element (18) zwischen dem Antrieb des Steuerhebels (17) und der Tresterfläche (12).

## Beschreibung

Die Erfindung betrifft eine Brühgruppe für einen Kaffeevollautomaten und insbesondere eine Brühgruppe mit einem Brühzylinder, einem im Brühzylinder verschiebbar gelagerten Brühkolben, dessen Oberseite eine Tresterfläche beim Brühvorgang definiert, einer mit dem Brühkolben gekoppelten Kolbenstange bzw. Stößel als dessen Antrieb und einem Steuerhebel für den Antrieb der Kolbenstange.

Bei herkömmlichen Kaffeevollautomaten für den Hausgebrauch werden gewöhnlicherweise Brühgruppen mit einem in einem Brühzylinder verschiebbar gelagerten Brühkolben verwendet, der über eine Kolbenstange mit einem durch einen Antrieb in Bewegung gesetzten Steuerhebel in Verbindung steht. Die Bewegung des Steuerhebels dient sowohl dem Verpressen des Kaffeepulvers als auch dem Ausstoßen des ausgelaugten Kaffeepulvers bzw. Tresters aus der Brühkammer.

Die DE 20 2009 000 258 U1 betrifft eine Kniehebel-Brühgruppe mit einer Brühkammer zur Aufnahme und zum Auslaugen von Kaffeepulver, mit einem Brühkolben zum Verdichten von Kaffeepulver in der Brühkammer und zum Auswurf des verdichteten Kaffeepulvers aus der Brühkammer und mit einer Federeinrichtung zum Antrieb des Brühkolbens, wobei die Federeinrichtung im Lastbereich der Verdichtung eine weitgehend lineare und flache Federkennlinie aufweist. Damit gelingt eine weitgehend mengenunabhängige Verdichtung von Kaffeepulver in der Brühkammer. Eine Verpressung des Tresters hat nicht nur für das Auslaugen des Kaffeepulvers eine Bedeutung, sondern auch für das anschließende Ausstoßen des Tresters aus der Brühkammer. Dafür ist ein weiterer Verpressvorgang vorgesehen. Nur ein ausreichend entfeuchteter und verpresster Trester lässt sich vollständig auswerfen. Ist er zu trocken, kann der Tresterkuchen zerfallen und beim Abstreifen teilweise zurückbleiben. Ist er zu feucht und zu wenig verpresst, können verschlammende Tresterreste in der Brühkammer verbleiben und als Verschmutzungen eine Fehlermeldung auslösen.

Der Brühkolben ist für den Tresterauswurf sowohl in Zug- als auch in Druckrichtung mit der Brühgruppe weitgehend kinematisch gekoppelt. Um auch unterschiedliche Pulver- bzw. Trestervolumina auswerfen zu können, ohne zu verklemmen, hält der Brühkolben einen Sicherheitsabstand gegenüber dem Brühkammeroberteil ein. Damit können auch unplanmäßig große Volumina verpresst und ausgestoßen werden.

Aufgabe der Erfindung ist es, einen Kaffeevollautomaten anzugeben, bei dem ein vollständiger Ausstoß des Tresters unabhängig von seinem Volumen gewährleistet ist.

Diese Aufgabe wird erfindungsgemäß bei einer Brühgruppe eines Kaffeevollautomaten der eingangs genannten Art mit einer Brühgruppe für einen Kaffeevollautomaten mit den im Anspruch 1 angegebenen Merkmalen bzw. mit einem Kaffeevollautomaten gemäß Anspruch 10 erreicht.

Demnach wird die Aufgabe durch ein in Antriebsrichtung des Brühkolbens elastisches Element zwischen dem Antrieb des Steuerhebels und des Brühkolbens bzw. seiner Tresterfläche gelöst. Das elastische Element kann also an nahezu jedem Ort innerhalb einer kinematischen Kette aus dem Steuerhebel, der Kolbenstange bis hin zum Brühkolben selbst und dort noch unterhalb der Tresterfläche angebracht sein. Die Antriebsrichtung des Brühkolbens muss nicht identisch mit seiner Bewegungsrichtung sein, sondern entspricht einer der ggf. unterschiedlichen Bewegungsrichtungen eines am Antrieb des Brühkolbens beteiligten Bestandteils der Brühgruppe, beispielsweise des schwenkbaren Steuerhebels. Die Erfindung wendet sich also davon ab, zum Ausgleich von Toleranzen in der Kaffeepulvermenge einen planmäßigen Leerlauf zum Antrieb des Steuerhebels vorzusehen. Sie verfolgt vielmehr das Prinzip eines planmäßig elastischen Ausgleichs in der kinematischen Kette im Antrieb des Brühkolbens.

Als elastisches Element kann jedes Bauteil dienen, das bei einer Druck- oder Zugbeanspruchung eine elastische Rückstellkraft aufbaut. Der Fachmann kennt elastische Elemente, deren Elastizität auf Formelastizität, Materialelastizität oder Kombinationen daraus beruht, bei denen die Rückstellkraft zum Beispiel auf einer mechanischen Federkraft oder auf Materialeigenschaften beruht. Die Stärke der Rückstellkraft lässt sich durch eine Formgebung des elastischen Elements oder eine Materialauswahl für das elastische Element abstimmen. Zum Beispiel über die Federkonstante eines Federelements oder die Shore-Härte eines Elastomers lässt sie sich derart abstimmen, dass eine weitgehend definierte Kraft auf den Brühkolben einwirkt, um so eine weitgehend definierte Verdichtung des Tresters im Brühzylinder zu ermöglichen. Eine definierte Verdichtung des Tresters nach dem Brühvorgang sorgt für eine optimale Feuchtigkeit bzw. eine gewünschte Trockenheit des Tresters, so dass er vollständig und rückstandsfrei aus der Brühkammer ausgestoßen werden kann.

Falls das Volumen des gemahlenen Kaffeepulvers zum Beispiel auf Grund der Bohnenqualität oder des Mahlgrades größer ist als üblich, ist bei gleich bleibendem Antriebsweg des Steuerhebels der auf einen starren Brühkolben ausgeübte Druck herkömmlicherweise größer als vorgegeben. Das erfindungsgemäß eingesetzte elastische Element kann diesen erhöhten Druck ausgleichen, indem es dem erhöhten Druck teilweise nachgibt und sich so weit komprimieren oder expandieren lässt, dass nahezu der vorgesehene Verpressdruck für die definierte Verdichtung sorgt. Dadurch kann bei gleich bleibendem Antriebsweg des Steuerhebels der Verschiebeweg des Brühkolbens reduziert oder vergrößert und damit das Volumen der Brühkammer geringfügig vergrößert bzw. verkleinert werden. Dadurch wirkt auch auf das vergrößerte Trestervolumen eine weitgehend gleiche Verpresskraft wie auf ein planmäßiges Trestervolumen.

Umgekehrtes gilt, falls das Volumen des Tresters geringer als planmäßig ausfällt und der voreingestellte Weg des Brühkolbens nicht ausreicht, um den für eine gleich bleibende Qualität erforderlichen Verpressdruck im Trester zu erzielen. In diesem Falle kann das elastische Element das Volumen der Brühkammer etwas verringern. Denn mit Aufbringen der planmäßigen Verpresskraft auf den Brühkolben wird das elastische Element planmäßig komprimiert oder expandiert (z.B. eine Zugfeder). Ist der Antriebsweg des Steuerhebels ausgeschöpft, ohne einen planmäßigen Verpressdruck im Trester hervorzurufen, aktiviert das elastische Element seine Rückstellkraft. Sie addiert sich zur Verpresskraft des Steuerhebels, so dass auf den Trester weitgehend die vorgesehene Verpresskraft einwirkt. Vorgesehene bzw. planmäßige Verpresskraft heißt im Sinne der Erfindung, dass die mittels des Brühkolbens auf die Oberfläche des Tresters ausgeübte Kraft sich in einem bestimmten Toleranzbereich einstellt. Je nach Rückstellkraft des elastischen Elements, zum Beispiel der Rückstellkraft eines Federelements oder des Elastizitätsmoduls eines elastischen Materials, kann so eine planmäßige Verpresskraft auf den Trester und damit dessen ausreichender Verdichtungsgrad eingestellt werden.

Der Steuerhebel steuert die Bewegungen des Brühkolbens in vorbestimmten Bewegungsmustern. "Vorbestimmte Bewegungsmuster" im Sinne der Erfindung heißt, dass der Steuerhebel Bewegungsabläufe des Brühkolbens definiert. Regelmäßige Bewegungen des Brühkolbens sind eine translatorische Schiebebewegung innerhalb des Brühzylinders und - zusammen mit dem Brühzylinder - eine rotatorische Kippbewegung in Richtung eines Auffangbehälters oder eines Kaffeepulvereinfüllstutzens. Die Bewegungen können durch eine Führung des Brühkolbens zum Beispiel in Schienen oder Drehlagerungen gesteuert werden. Ein beispielhafter Ablauf solcher Bewegungsabfolgen in einer Kulissenführung ist in der Patentanmeldung DE 10 2007 060 813 A1 beschrieben.

In einer ersten vorteilhaften Ausgestaltung der erfindungsgemäßen Brühgruppe umfasst die Kolbenstange selbst das elastische Element. Dabei kann entweder die gesamte Kolbenstange oder nur ein Teilbereich der Kolbenstange elastisch ausgestaltet sein. Es kann jedes elastische Material eingesetzt werden, das unter den Brühbedingungen stabil ist oder das vom Brühbereich derart abgeschirmt ist, dass es nicht den hohen Temperaturen und der hohen Luftfeuchtigkeit, die gewöhnlich im Brühbereich vorliegen, ausgesetzt ist. Elastische Materialien können zum Beispiel Elastomere aus Kunststoffen oder elastische Kautschukmaterialien sein. Das elastische Element befindet sich jedenfalls in der Kolbenstange in einem Bereich zwischen dem Angriffspunkt des Steuerhebels an der Kolbenstange und der Koppelung der Kolbenstange am Brühkolben. Alternativ dazu kann das elastische Element in einer Belastungsrichtung an der Kolbenstange befestigt sein und bei einer Belastung der Kolbenstange komprimiert werden. Zum Beispiel kann die Kolbenstange aus wenigstens zwei teleskopierbaren Bauteilen ausgestaltet sein, die miteinander über eine Schraubenfeder elastisch verbunden sind. Dadurch lässt sich das elastische Element besonders Platz sparend in der Brühgruppe unterbringen.

Nach einer weiteren vorteilhaften Ausgestaltung der erfindungsgemäßen Brühgruppe kann die Kolbenstange mit einem ihrer Enden, also am Brühkolben oder ihrem dem Brühkolben entgegengesetzten Ende, in einer Hülse geführt bzw. gehalten und das elastische Element in der Hülse angeordnet sein. Die Hülse kann also an einer kinematischen Koppelungsstelle der Kolbenstange angreifen, an der der Steuerhebel die Verpresskraft einleitet oder die Kolbenstange die Verpresskraft an den Brühkolben weitergibt. Das elastische Element kann dabei die Kolbenstange in der Hülse elastisch federnd lagern. Die Hülse samt elastischem Element kann bei Verschleiß einfach ausgetauscht oder gegebenenfalls nachgerüstet werden, so dass auch ältere Kaffeevollautomaten erfinderisch ausgestaltet werden können.

In einer weiteren vorteilhaften Ausgestaltung kann das elastische Element an oder in dem Steuerhebel vorgesehen sein. Da das elastische Element dann etwas weiter von dem Brühkolben entfernt liegt, wird es weniger durch Temperatur- und Feuchtigkeitsschwankungen beaufschlagt als ein direkt an der Kolbenstange vorgesehenes Element. Alternativ kann das elastische Element direkt am Verbindungsbereich zwischen dem Steuerhebel und dem Brühkolben bzw. am Anfang der Bewegungskette, d. h. unmittelbar am Kraftübergang vom Antrieb auf den Steuerhebel, ausgebildet sein. So muss kein weiteres bewegliches Bauteil eingesetzt werden, was den Verschleiß reduziert und die Lebensdauer der Brühgruppe erhöht.

Nach einer weiteren vorteilhaften Ausführungsform der Erfindung kann das elastische Element eine Feder, zum Beispiel eine Spiralfeder oder eine Blattfeder, sein. Sie sind regelmäßig aus Metall und daher robust und verschleißarm ausgebildet. Spiralfedern oder Blattfedern können zum Beispiel in einer Hülse unterhalb der Kolbenstange angebracht sein, um die Rückstellkraft auf die Kolbenstange in Richtung des Brühkolbens auszuüben. Alternativ kann eine Spiralfeder zum Beispiel auch in einem Bereich der Kolbenstange selbst vorgesehen sein, zum Beispiel innerhalb der oben genannten teleskopierbaren Kolbenstange. Alternativ können zwei Hebelarme des Steuerhebels, die zueinander verschwenkbar sind, über z. B. eine Spiralfeder als elastisches Element gegeneinander abgestützt sein. Auch hier kann es sich bei der Spiralfeder um eine Druck - oder eine Zugfeder handeln.

In einer weiteren erfindungsgemäßen Ausgestaltung kann der Steuerhebel einen abgewinkelten Hebelarm umfassen, der ganz oder teilweise aus einem elastischen Material ausgebildet ist. Er kann zugleich als Befestigungselement zur Verbindung des Steuerhebels mit der Kolbenstange dienen. Ein abgewinkelter Hebelarm aus einem hinreichend flexiblen Material kann zum Beispiel ganz oder teilweise aus einem Metalldraht oder einem flexiblen Kunststoffbügel ausgebildet sein, der beim Bewegen der Kolbenstange eine ausreichende Rückstellkraft auf die Kolbenstange beim Verdichten des Tresters ausüben kann. Die Abwinkelung ermöglicht eine definierte Biegung des Metalldrahts proportional zu einer aufgebrachten Kraft. Damit ist die Kolbenstange so gelagert, dass sie beim Verdichten des Tresters etwas nachgeben kann. Da der Steuerhebel zugleich das elastische Element enthält, er also eine Doppelfunktion übernimmt, führt diese Ausgestaltungsform zu einer besonders Platz sparenden Konstruktion. Ein elastisch ausgebildeter Steuerhebel, mit dem die Kolbenstange geführt ist, ist auch weniger störanfällig, zum Beispiel hinsichtlich Verklemmungen bzw. Überlastungen des Brühkolbens auf Grund von Volumentoleranzen des Tresters, da der Steuerhebel bei Überlastung etwas nachgeben kann. Ein erfindungsgemäß ausgebildeter Steuerhebel kann zudem einfach ausgetauscht und nachgerüstet werden, ohne dass dazu weitere Baugruppen verändert werden müssen.

In einer weiteren vorteilhaften Ausgestaltung der Erfindung kann ein elastisches Element im Brühbetrieb weitgehend unabhängig von dem in den Brühzylinder eingefüllten Kaffeevolumen eine weitgehend definierte Verpresskraft über den Brühkolben auf den in dem Brühzylinder befindlichen Trester ausüben. Der Vorteil der definierten Druckkraft liegt in der bereits geschilderten definierten Verdichtung des Tresters. Da ja erfindungsgemäß der Verdichtungsgrad weitgehend definierbar und konstant ist, kann eine vollständige Entleerung der Brühkammer sichergestellt werden, auch wenn das Volumen des gemahlenen Kaffeepulvers variiert.

Allen Ausführungsformen ist gemeinsam, dass eine größere Verarbeitungsbandbreite bezüglich des eingesetzten Kaffeepulvers möglich ist. Insbesondere eine Variation der Kaffeepulvermenge kann durch die erfindungsgemäße Ausgestaltung der Brühgruppe verarbeitet werden. Das führt dazu, dass der Trester mit einer weitgehend definierten Kraft verpresst wird, so dass Qualitätsschwankungen des erhaltenen Produkts, d. h. der aufgebrühten Kaffeeportionen, durch Tresterrückstände aus vorangegangenen Zubereitungsvorgängen ausgeschlossen werden können. Dies wird auch erzielt, ohne dass zum Beispiel auf Schwankungen in der Kaffeequalität oder betriebsbedingte Funktionstoleranzen oder Abnützungen des Kaffeevollautomaten, insbesondere des eingebauten Mahlwerks, geachtet werden muss. Da der Anpressdruck des Brühkolbens auf den Trester nach dem Brühvorgang durch die Elastizität des Federelements weitgehend definiert ist, kommt es zu einem rückstandfreien Auswurf des Tresters.

Die aus dem Stand der Technik bekannten Kniehebel-Brühgruppen verfügen über eine Kulisse im Brühgruppengehäuse zur Steuerung insbesondre auch des Steuerhebels. Nach einer weiteren vorteilhaften Ausgestaltung der Erfindung kann die Kulisse Auslenkmittel umfassen, die eine trestervolumen-abhängige Auslenkung des Steuerhebels ermöglichen. Die Auslenkmittel erlauben es, die Auslenkbewegung des Steuerhebels in Abhängigkeit von der Größe des Trestervolumens sofort und ohne Einhalten von Sicherheitsabständen auszulösen. Die Auslenkmittel machen eine Auslenkung des Steuerhebels und damit die Verschubbewegung des Brühkolbens zum Auswurf des Tresters von dessen Volumen insofern abhängig, als eine große Trestermenge eine andere Verpressbewegung des Brühkolbens auslöst als eine kleine. Damit gelingt es, mit einfachen mechanischen Mitteln eine weitgehend gleichartige Verpressung des Tresters unabhängig von seinem Volumen zu erreichen und ihn zuverlässig und vollständig auszuwerfen. Vor allem geringere als planmäßige Trestervolumina lassen sich erfindungsgemäß ausreichend verpressen, dadurch entwässern und vollständig auswerfen. Erfindungsgemäße Auslenkmittel können gestaffelt angeordnete Anlaufkanten, Rasten oder Reibflächen an der Kulisse sein, die auf die Steuerflügel des Steuerhebels wirken. Weitere Ausführungsformen dazu finden sich in der Anmeldung mit dem Anmelderzeichen 201101587 und dem Titel "Vorrichtung zur volumenabhängigen Tresterverpressung" vom selben Tag wie die vorliegende Anmeldung.

Die vorstehenden, erfindungsgemäß ausgestalteten Brühgruppen können vorteilhafterweise in einem Kaffeevollautomaten, wie zum Beispiel einer Kaffeemaschine für den Hausgebrauch, eingesetzt werden. Die eingangs genannte Aufgabe wird daher auch durch einen Kaffeevollautomaten mit einer erfindungsgemäßen Brühgruppe der vorgenannten Art gelöst.

Das Prinzip der Erfindung wird im Folgenden anhand von Zeichnungen beispielshalber noch näher erläutert. In den Zeichnungen zeigen:
- Figur 1:: eine perspektivische Vorderseitenansicht einer ersten Ausführungsform einer erfindungsgemäßen Brühgruppe,
- Figur 2:: eine perspektivische Rückseitenansicht der Brühgruppe,
- Figuren 3, 4:: perspektivische Ansichten eines Steuerhebels gemäß einer zweiten Ausführungsform der Erfindung, und
- Figur 5:: eine perspektivische Ansicht einer dritten Ausführungsform einer erfindungsgemäßen Brühgruppe.

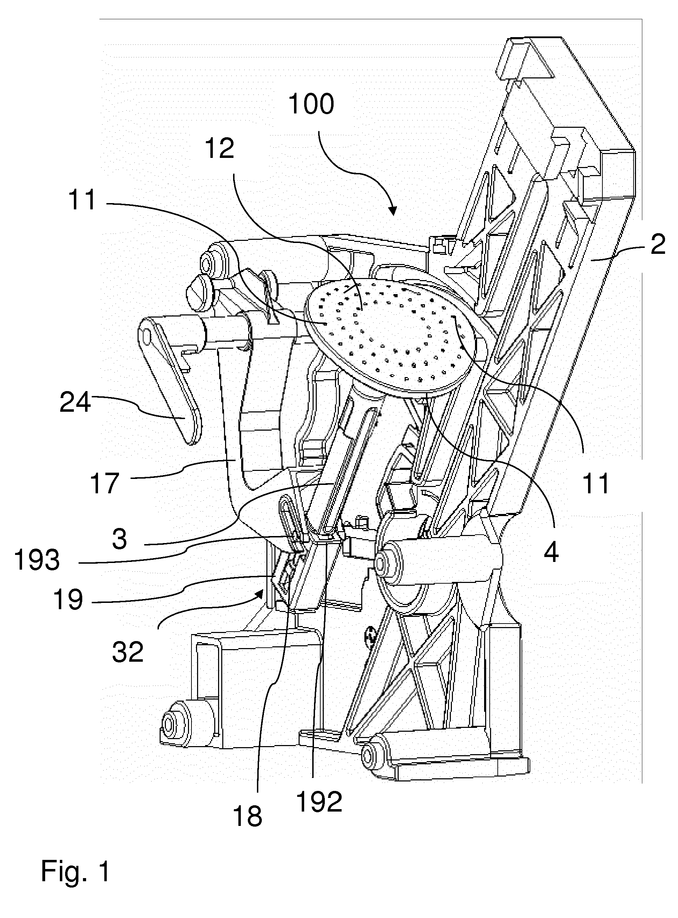

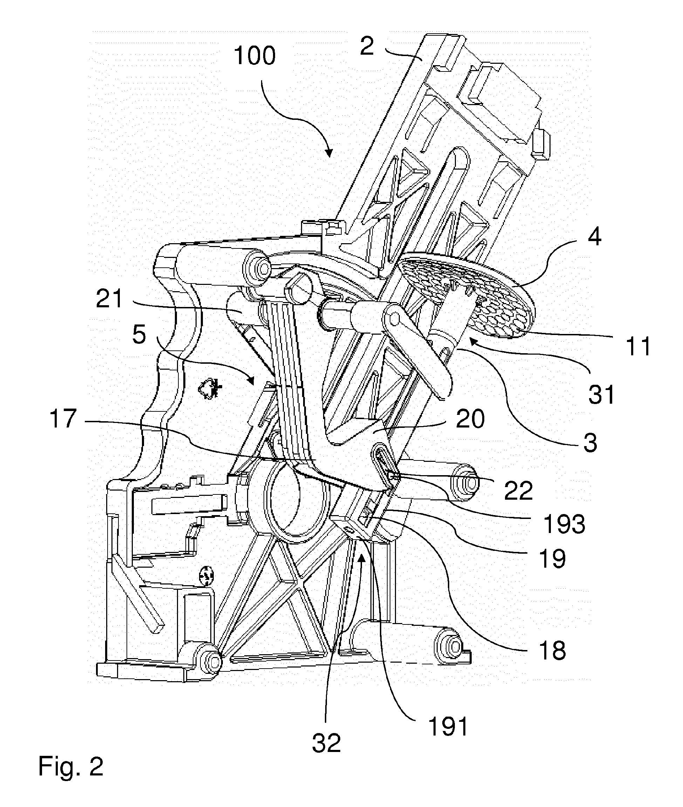

In den Figuren 1 und 2 ist ein Teil einer Brühgruppe gemäß einer ersten Ausführungsform der Erfindung gezeigt. Die Brühgruppe umfasst zwei Wände 2 (nur eine gezeigt) als Bestandteile eines Gehäuses 100 und eine schräg geneigte Kolbenstange 3 mit einem oberen, ersten Ende 31 und einem unteren, zweiten Ende 32 (Figur 2). Am ersten Ende 31 ist ein Brühkolben 4 mit einer tellerförmigen, einachsig leicht gebogenen Tresterfläche 12 mit ringförmig angeordneten Durchtrittsöffnungen 11 für Brühwasser angebracht. Die Tresterfläche 12 stellt eine kaffeepulverberührte Oberfläche des Brühkolbens 4 dar. Am zweiten Ende 32 der Kolbenstange 3 greift ein Steuerhebel 17 an. Er ist über einen Lagerbolzen 21 an einem nicht dargestellten Brühzylinder bzw. dessen Gehäuse drehbar gelagert. Vom Lagerbolzen 21 stehen radial ein abgewinkelter Steuerarm 20 mit Langlöchern 22 und zwei Steuerflügel 24 ab, die über den Lagerbolzen 21 drehfest miteinander gekoppelt sind. Der Steuerhebel 17 ist gegenüber der Kolbenstange 3 an einer becherförmigen Hülse 19 verschwenkbar und über ein elastisches Element 18 in der Erstreckungsrichtung der Kolbenstange 3 und damit in ihrer Bewegungsrichtung verschiebbar gelagert.

Die Brühgruppe umfasst des Weiteren einen Brühzylinder (nicht gezeigt), in dem der Brühkolben 4 verschiebbar angeordnet ist und der zusammen mit einem Brühkammeroberteil eine Brühkammer (beide nicht gezeigt) ausbildet. In der Brühkammer wird gemahlenes Kaffeepulver durch den Brühkolben 4 verpresst und anschließend ausgelaugt. Der Brühkolben 4 verdichtet den verbleibenden Trester nach dem Auslaugen ein weiteres Mal und stößt ihn aus der Brühkammer aus. Diese Bewegungen des Brühkolbens 4 werden über eine Kulissenführung 5 in den Wänden 2 mit Hilfe der Steuerflügel 24 des Steuerhebels 17 bestimmt. Die Kulissenführung 5 definiert über Führungsschienen und Anschlagpunkte die Bewegungsabläufe des Steuerhebels 17. Erfindungsgemäß werden die vorhandenen Anschlagpunkte und Bewegungsabläufe weitgehend unverändert verwendet, wobei jedoch das elastische Element 18 in der Hülse 19 Toleranzen im Trestervolumen zulässt.

Die becherförmige Hülse 19 mit ihrem rechteckigen Boden 191 (Figur 1) und einem Becherrand 192 (Figur 2) setzt am unteren, zweiten Ende 32 der Kolbenstange 3 an, so dass jene in der Hülse 19 verschiebbar gelagert ist. Die elastische Lagerung der Kolbenstange 3 besteht in einer in der Hülse 19 integrierten Spiralfeder als elastischem Element 18, die die Kolbenstange 3 auf dem Boden 191 der Hülse 19 abstützt. An ihrem Becherrand 192 sind nach außen abstehende und einander gegenüberliegende zylindrische Zapfen 193 angeordnet, an denen der Steuerhebel 17 angreift. Dazu ragen die Zapfen 193 der Hülse 19 in Langlöcher 22 am Steuerhebel 17 hinein, so dass die Kulissenführung 5 eine rotatorische Bewegung des Steuerhebels 17 in eine translatorische Bewegung der Kolbenstange 3 übersetzt.

Der Brühkolben 4 ist über die Kolbenstange 3 mit dem Steuerhebel 17 gekoppelt und wird durch sie in dem Brühzylinder auf und ab bewegt. Bei unveränderten Bewegungsabläufen ermöglicht das elastische Element 18 eine Vergrößerung des Brühkammervolumens, falls das Trestervolumen zum Beispiel aufgrund eines gröberen Mahlgrads größer als das erwartete Volumen ist. Es erlaubt dem Brühkolben 4, während des Verdichtens des Tresters einen größeren als den planmäßigen Abstand zum Brühkammeroberteil einzuhalten, obwohl der Steuerhebel 17 die vorgesehene Position für ein vollständiges Verpressen des Tresters eingenommen hat. Denn das größere Volumen in der Brühkammer gleicht das elastische Element 18 durch seine Kompression aus. Damit kann der Steuerhebel 17 seine planmäßige Endposition einnehmen, ohne das größere Trestervolumen übermäßig zu verpressen oder gar den Brühkolben 4 zu verklemmen. Der Steuerhebel 17 bringt vielmehr einen weitgehend planmäßigen, nämlich geringfügig höheren Verpressdruck auf den Trester auf. Die Endposition muss im Vergleich zu einer herkömmlichen Brühgruppe nicht verändert werden, da das elastische Element 18 einen geringeren Verschiebeweg des Brühkolbens und damit die Variation des Brühkammervolumens in der erfindungsgemäßen Brühgruppe ermöglicht.

Die Elastizität des elastischen Elements 18 ist derart bemessen, dass eine Belastung durch den Steuerhebel 17 das elastische Element 18 jedenfalls komprimiert. Falls nun das Trestervolumen geringer als planmäßig ist, erreicht der Brühkolben 4 beim Verpressvorgang seine Endposition, noch bevor ein ausreichender Verspressdruck auf das Trestervolumen wirkt. Jetzt kann das elastische Element 18 mangels ausreichendem Verpressdruck als Gegenkraft seine Rückstellkraft aktivieren, drückt den Brühkolben 4 etwas weiter in Richtung des Brühkolbenoberteils (nicht gezeigt) und verkleinert damit das Brühlkammervolumen. Die Verkleinerung erfolgt so lange, bis der Druck weitgehend, nämlich nicht ganz dem definierten Verpressdruck entspricht bzw. bis der Trester weitgehend den planmäßigen Verdichtungsgrad erreicht hat, der für eine rückstandfreie Entleerung der Brühkammer zweckmäßig ist.

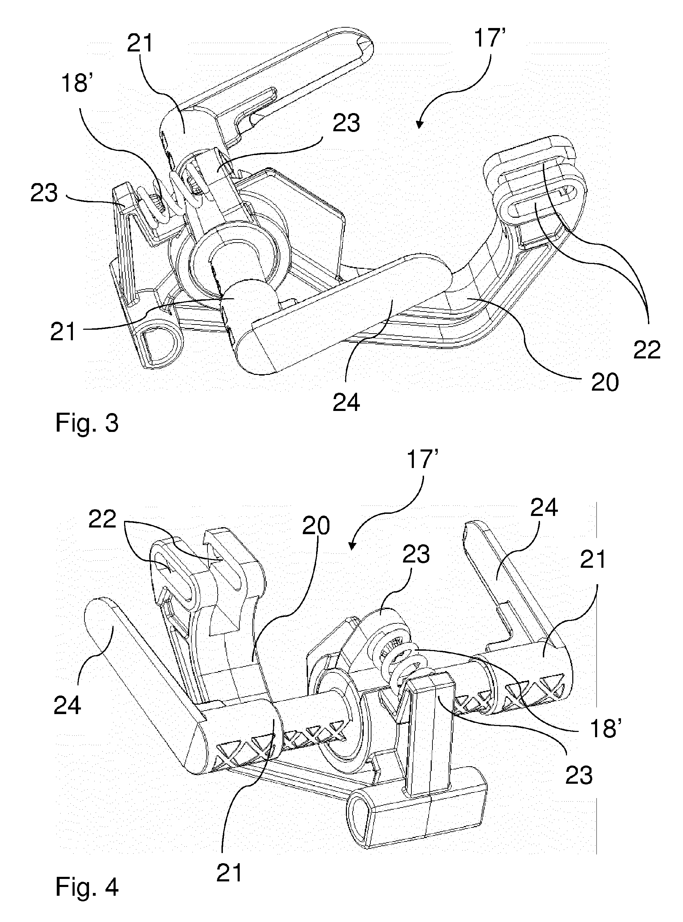

In der Figuren 3 und 4 ist lediglich ein Steuerhebel 17' einer alternativen Ausführungsvariante einer erfindungsgemäßen Brühgruppe gezeigt. Der Steuerhebel 17' umfasst einen abgewinkelten Steuerarm 20 mit Langlöchern 22, über die er mit einer Kolbenstange 3 einer Brühgruppe in Eingriff steht (vgl. Figur 1 und 2). Der Steuerarm 20 ist auf einem Lagerbolzen 21 drehbar gelagert. Die Steuerflügel 24 dagegen sind mit dem Lagerbolzen 21 einstückig verbunden. Über eine Verdrehung der Steuerflügel 24 erhält der Steuerhebel 17' seinen Antrieb, den er über den Lagerbolzen 21 an den Steuerarm 20 weiter gibt. Sowohl vom Steuerarm 20 aus auch vom Lagerbolzen 21 stehen zwei Widerlagerhöcker 23 weitgehend radial ab. Zwischen ihnen ist eine Spiralfeder als elastisches Element 18' eingeklemmt. Dadurch erfolgt die Übertragung einer Rotation des Lagerbolzens 21 auf den Steuerarm 20 nicht direkt, sondern über die Spiralfeder als elastisches Element 18'.

Ein zu großes Volumen des Tresters in der Brühkammer ruft bei seiner Verdichtung einen Gegendruck hervor. Bislang wurde der Trester dadurch stärker als geplant verpresst. Jetzt nimmt das elastische Element 18' durch Kompression einen wesentlichen Teil der Energie des Gegendrucks auf den Steuerarm 20 auf. Dadurch wird verhindert, dass der Brühkolben 4 einen übermäßigen Verpressdruck auf den Trester ausübt, was eine weitgehend definierte Verdichtung des Tresters bewirkt.

Auch das elastische Element 18' ist derart bemessen, dass es bei einer Belastung des Steuerhebels 17' beim Verdichten des Tresters jedenfalls komprimiert wird. Befindet sich in der Brühkammer ein geringeres als das planmäßige Kaffeepulvervolumen, das nach Erreichen der Endposition des Brühkolbens 4 noch nicht ausreichend verpresst ist, aktiviert das elastische Element 18' seine Rückstellkraft. Es sorgt damit für eine ausreichende Verdichtung auch des geringeren Trestervolumens.

Somit kann mit dem elastischen Steuerhebel 17' von Kaffeeportion zu Kaffeeportion eine gleich bleibende Qualität gewährleistet werden. Der Steuerhebel 17' kann in eine herkömmliche Brühgruppen eingesetzt bzw. gegen einen herkömmlichen Steuerhebel 17 ausgetauscht werden, ohne dass die Brühgruppe im Übrigen geändert werden müsste.

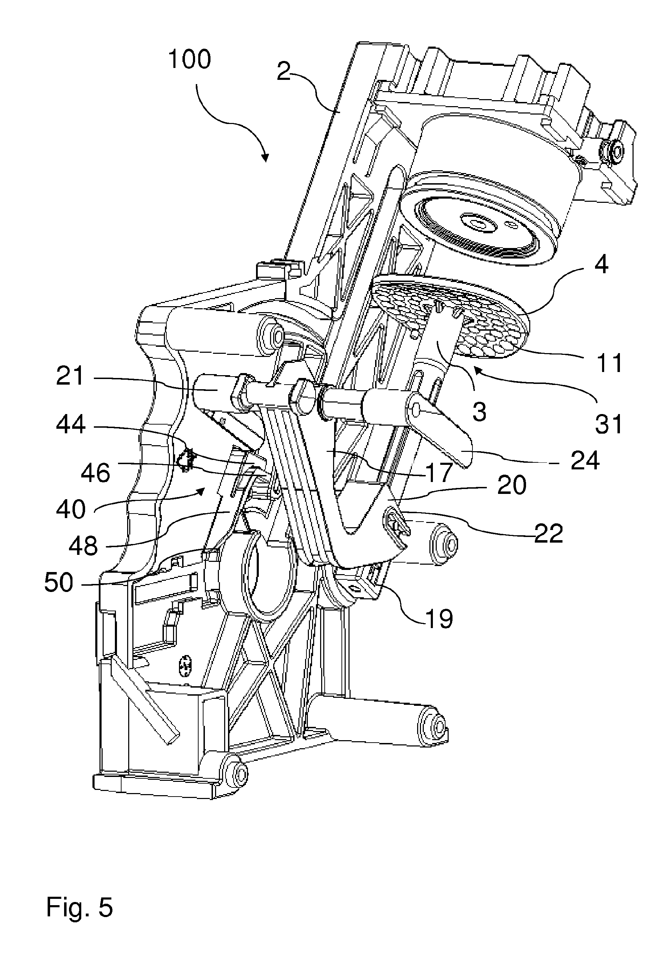

Figur 5 zeigt eine weitere Ausführungsform der Erfindung. Zusätzlich zum elastischen Element 18, 18' weist die Kulisse 5 an den Seitenwänden 2 Anschläge 40 auf, nämlich eine in der Ebene der Seitenwand 2 abgewinkelt verlaufende obere Anlaufkante 44 und eine ebenso geformte untere Anlaufkante 46. Die Anlaufkanten 44, 46 sind in der Ebene der Seitenwände 2 gegeneinander versetzt und parallel zur Ebene der Seitenwände 2 der Höhe nach gestaffelt ausgebildet. Sie liegen damit in der Verschiebungsrichtung des Brühkolbens 3 stufenförmig abgetreppt übereinander. Sie gehen in eine gemeinsame Außenfläche 48 über, die senkrecht auf die jeweilige Seitenwand 2 steht und abwärts in einer Anlaufschräge 50 auslaufen.

Bei einer Aufwärtsbewegung des Brühzylinders und des Steuerhebels 17 laufen die Steuerflügel 24 gegen die Anlaufschrägen 50 an und lassen sich von ihnen von den Seitenwänden 2 weg nach innen drücken. Je nach Befüllungsgrad der Brühkammer bzw. je nach Trestervolumen gleiten die Steuerflügel 24 nur über die unteren Anlaufkanten 46 (bei einer mehr als planmäßigen Trestermenge) oder über die beiden Anlaufkanten 44, 46 hinweg und springen zurück in seine Ausgangsstellung Richtung Seitenwand 2 nach außen. In Figur 5 liegen sie an den oberen Anlaufkanten 44 an. Bei einer nun folgenden Abwärtsbewegung des Brühzylinders halten die oberen Anlaufkanten 44 die Steuerflügel 24 fest. Die drehbare Lagerung des Steuerhebels 17 ermöglicht es ihm dennoch, zusammen mit dem Brühzylinder abwärts verschoben zu werden. Dabei lenkt die obere Anlaufkante 44 den Steuerflügel 24 aus und verdreht damit den Steuerhebel 17. Bei der weiteren Abwärtsbewegung gleitet der Steuerflügel 24 an der oberen Anlaufkante 44 entlang, bis er bei einer Drehung um etwa 90° freikommt und in dieser Stellung an den Außenflächen 48 abwärts streift.

Da es sich bei den vorhergehenden, detailliert beschriebenen Brühgruppen um Ausführungsbeispiele handelt, können sie in üblicher Weise vom Fachmann in einem weiten Umfang modifiziert werden, ohne den Bereich der Erfindung zu verlassen. Insbesondere können die konkreten Ausgestaltungen der elastischen Elemente in anderer Form als in der hier beschriebenen vorliegen. Ebenso kann der Brühzylinder oder der Steuerhebel in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können. Auch die Verwendung der Bezeichnungen "Mittel", "System" und "Element" schließt nicht aus, dass ein solches Bauteil aus mehreren Komponenten aufgebaut ist.

### Bezugszeichenliste

- 2: Wand
- 3: Kolbenstange
- 4: Brühkolben
- 5: Kulissenführung
- 11: Durchtrittsöffnungen
- 12: Tresterfläche
- 17, 17': Steuerhebel
- 18, 18': elastisches Element
- 19: Hülse
- 20: Steuerarm
- 21: Lagerbolzen
- 22: Langlöcher
- 23: Widerlagerhöcker
- 24: Steuerflügel
- 31: oberes Ende
- 32: unteres Ende
- 40: Auslenkmittel
- 44: obere Anlaufkante
- 46: untere Anlaufkante
- 48: Außenfläche
- 50: Anlaufschräge
- 100: Brühgruppengehäuse
- 191: Boden
- 192: Becherrand
- 193: Zapfen

## Patentansprüche

1. Brühgruppe (100) eines Kaffeevollautomaten mit einem verschiebbar gelagerten Brühkolben (4), dessen Oberseite eine Tresterfläche (12) beim Brühvorgang definiert, einer mit dem Brühkolben (4) gekoppelten Kolbenstange (3) und einem Steuerhebel (17) für den Antrieb der Kolbenstange (3), **gekennzeichnet durch** ein elastisches Element (18) zwischen dem Antrieb des Steuerhebels (17) und der Tresterfläche (12).

2. Brühgruppe (100) nach Anspruch 1, **dadurch gekennzeichnet, dass** die Kolbenstange (3) das elastische Element (18) umfasst.

3. Brühgruppe (100) nach Anspruch 1 oder 2, **dadurch gekennzeichnet, dass** die Kolbenstange (3) mit ihrem dem Brühkolben (4) entgegengesetzten Ende in einer Hülse (19) geführt ist und das elastische Element (18) in der Hülse (19) vorgesehen ist.

4. Brühgruppe (100) nach einem der vorangehenden Ansprüche, **gekennzeichnet durch** ein elastisches Element (18) in der Kolbenstange (3) in einem Bereich zwischen dem Angriffspunkt des Steuerhebels (17) an der Kolbenstange (3) und dem Brühkolben (4).

5. Brühgruppe (100) nach einem der vorangehenden Ansprüche, **gekennzeichnet durch** eine Kolbenstange (3), die insgesamt oder in einem Teil des Bereichs zwischen dem Angriffspunkt des Steuerhebels (17) an der Kolbenstange (3) und dem Brühkolben (4) aus einem elastischen Material ausgebildet ist.

6. Brühgruppe (100) nach einem der vorangehenden Ansprüche, **gekennzeichnet durch** ein elastisches Element (18) in dem Steuerhebel (17).

7. Brühgruppe (100) nach einem der vorangehenden Ansprüche, **dadurch gekennzeichnet, dass** das elastische Element eine Druckfeder umfasst.

8. Brühgruppe (100) nach einem der vorangehenden Ansprüche, **dadurch gekennzeichnet, dass** der Steuerhebel (17) einen gebogenen Hebelarm umfasst, der ganz oder teilweise aus einem flexiblen Material ausgebildet ist.

9. Brühgruppe (100) nach einem der vorangehenden Ansprüche mit einer Kulisse (5) und mit Auslenkmitteln (40) an der Kulisse (5) zur Auslenkung des Steuerhebels (17), **gekennzeichnet durch** eine trestervolumen-abhängige Auslenkung des Steuerhebels (17).

10. Kaffeevollautomat (101) mit einer Brühgruppe (100) nach einem der Ansprüche 1 bis 9.
